# EUROPEAN PATENT APPLICATION

(11) **EP 0 933 499 A1**
(43) Date of publication of application: **04.08.1999**
(21) Application number: 99102005.8
(22) Date of filing: 01.02.1999
(51) Int. Cl.: F01B 9/02, F02B 75/32, F16H 21/36

(54) **A crank mechanism for a reciprocating machine, particularly for an internal combustion engine**

(30) Priority: 02.02.1998 IT TO980080
(71) Applicant: FIAT AUTO S.p.A., 10135 Torino (IT)
(72) Inventor: Titolo, Andrea, 10139 Torino (IT)
(74) Representative: Quinterno, Giuseppe

(57) **Abstract**

A crank mechanism for a reciprocating machine, particularly an internal combustion engine, comprising a rotatably mounted crankshaft (4) and at least one piston (6) which can be subject to a reciprocating motion within a respective rectilinear guide (5) as a consequence of the rotation of the crankshaft (4). Each piston (6) is associated with a drive member (8) having one end (10) which surrounds a crank pin of the crankshaft (4). Each drive member (8) is rigidly connected to at least one associated piston (6). This therefore concerns a particular epicyclic gear mechanism which allows rectilinear motion of the connection rod (12) for connecting the kinematic mechanism to the piston.

## Description

The present invention relates in general to reciprocating machines such as internal combustion engines, volumetric compressors, pumps or hydraulic motors and the like, which utilise a crank mechanism as a system for conversion of a reciprocating motion of one element into rotary motion of another element, or vice versa.

More specifically the invention relates to a crank mechanism for a reciprocating machine, particularly an internal combustion engine, comprising a rotatably mounted crankshaft and at least one piston which can be subject to a reciprocating motion along a respective rectilinear guide consequent on the rotation of the crankshaft, in which each piston is associated with a drive member having one end which surrounds a crank pin of the crankshaft.

One object of the present invention is to provide a crank mechanism of the type defined above, which in operation does not give rise to any lateral thrust due to the gas pressure on the piston guide and which makes it possible to provide a pure sinusoidal motion of the pistons.

Another object of the invention is to provide a crank mechanism which makes it possible to simplify the structure of reciprocating machines of the previously known type and reduce their overall dimensions.

This object is achieved thanks to the fact that each drive member is rigidly connected to at least one associated piston.

Thanks to this arrangement, during operation of the reciprocating machine of the invention there arise no lateral thrust on the pistons, which can therefore be formed with a simple structure, in particular having no associated skirt, which is advantageous for lightness and consequently for the reduction of the inertial forces associated with their movement as well as the associated production costs.

In practice, a crank mechanism according to the invention behaves as a classic crank mechanism in which the length of the connection rod is equal to the radius of the crank, or rather to the distance between each crank pin and the axis of rotation of the crankshaft, and since the connection between the connection rod and the piston is rigid, obtained by means of the said drive member to which the piston is fixed, the gudgeon pin for articulating the connection rod to the piston is no longer necessary, which constitutes another reason why the piston skirt can be eliminated which, in conventional crank mechanisms, also acts as a support structure for the hubs in which the gudgeon is engaged.

Because each drive member is rigidly connected to the associated piston and can not therefore assume any inclined orientation with respect to the direction of displacement of the associated piston, the angle formed between each drive member and the rectilinear guide within which the piston slides is always nil. For this reason the laws of motion for the displacement, velocity and acceleration of the pistons can be defined by means of trigonometric functions which depend solely on the so-called crank angle, and which are therefore of purely sinusoidal type. Because of this fact, in a machine according to the invention the considerable advantage is obtained that all the inertial forces and couples of orders greater than the first, both in the direction of rotation and opposite it, are entirely absent and therefore do not need to be balanced. In this way it is possible to achieve for example four and eight cylinder engines which are intrinsically balanced both statically and dynamically without recourse to complex additional balancing systems such as additional shafts for balancing second order and greater inertial forces and couples.

Thanks to the invention it is also possible to provide single cylinder, twin cylinder, three cylinder and five cylinder engines balanced in a simple manner, all the inertial forces and couples of orders greater than one being nil, by balancing only the inertial forces and the rotating and counter rotating couples of the first order in a rather simple manner allowed by the use of the structural characteristics of the crank mechanism subject of the invention.

Since a machine provided with the crank mechanism according to the invention allows a purely sinusoidal motion of the piston to be obtained, in which inertial forces and couples of greater than the first order are absent, it is possible to eliminate not only the rotating and counter rotating balancing shafts running at twice the speed of the crankshaft, but also all the associated transmission members such as gear wheels, belts and bearings, thereby allowing a significant simplification of the machine to be obtained and therefore a drastic reduction in its production costs.

The machine can therefore by made very compact with respect to previously known machines and it is possible in particular to make the crank case of very limited dimensions with all the associated advantages of overall weight reduction of the engine and shorter production times, also allowing a greater visibility from the passenger compartment to be obtained and permitting a greater stylistic design freedom.

Because inertial forces and couples of orders greater than the first are absent, and particularly those greater than the second order which are normally not balanced for reasons of complexity, the vibration associated with the operation of the machine are greatly reduced and with it the noise, and the durability of the engine and of systems connected to it are increased as a consequence of the lower induced stresses with respect to similar previously known machines.

Further characteristics and advantages of the invention will become more clearly evident from a reading of the following detailed description with reference to the attached drawings, provided purely by way of non-limitative example, in which:
Figure 1 is a sectioned side elevation of a reciprocating internal combustion engine having four cylinders in line, provided with a crank mechanism according to the invention;
Figures 2a, 2b, 2c and 2d illustrate transverse sectioned elevations taken on the lines II-II of Figure 1 similar to one another and corresponding to different points in the operation of the engine;

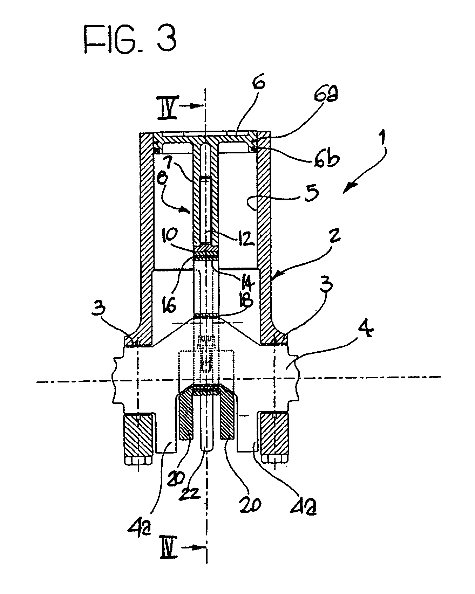

Figure 3 is a sectioned side view similar to Figure 1 of a detail of a reciprocating internal combustion engine which may be of single cylinder, twin cylinder, three cylinder or five cylinder type; and
Figures 4a, 4b, 4c and 4d are views similar to Figures 2a, 2b, 2c and 2d taken respectively along the line IV-IV of Figure 3.

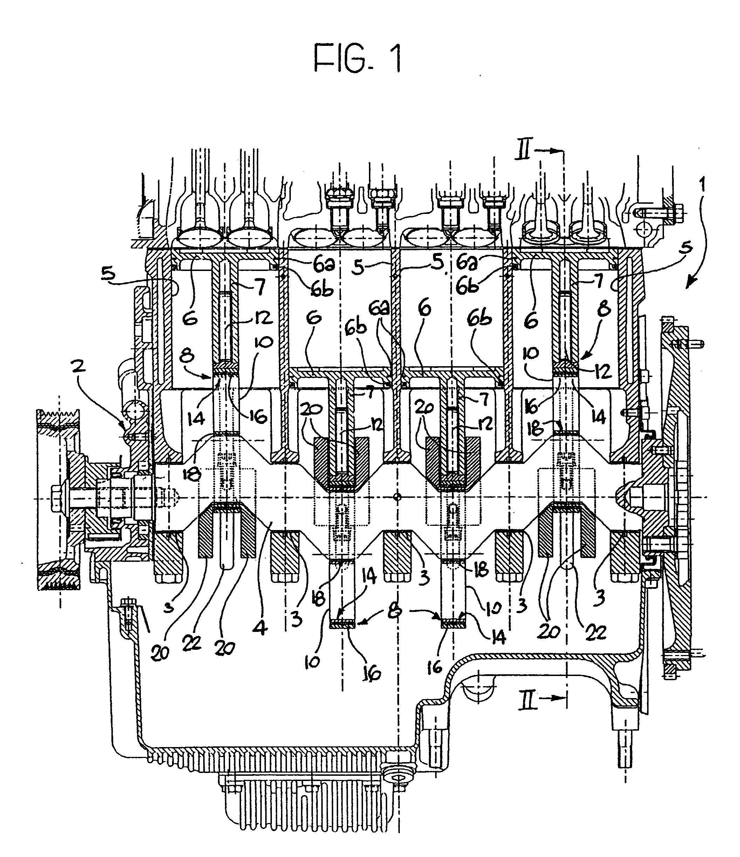

Referring now to Figure 1, the reference numeral 1 generally indicates a reciprocating internal combustion engine having a crank case 2 which, by means of main bearings 3 supports a crankshaft 4 for rotation, above which (with reference to the drawings), there is disposed at least one cylinder 5 which constitutes a rectilinear guide for the reciprocating motion of an associated piston 6.

Notwithstanding that in the present detailed description specific reference is made to a reciprocating internal combustion engine, the invention is nevertheless applicable to other reciprocating machines such as volumetric compressors, pumps, hydraulic motors and the like.

Each piston 6 is made in such a way as to have only a crown and a small annular peripheral portion disposed in contact with the sleeve of the associated piston 5, sufficient to house only two sealing rings 6a, 6b, typically a piston ring and an oil scraper ring.

Each piston 6 is connected to the crankshaft 4 by means of a system for converting its reciprocating motion into rotary motion of the crankshaft 4, commonly called a crank mechanism, which in the case of the present invention assumes characteristics generally similar to those of an epicyclic gear mechanism.

From the crown of each piston 6 extends, coaxially, towards the crankshaft 4 a hollow stem 7 to allow its connection to a drive member 8 a portion of which surrounds a crank pin of the crankshaft 4 in a position corresponding to the associated piston.

In particular, each drive member has an annular body 10 of relatively large diameter within which the corresponding portion of the crankshaft 4 is mounted, in an eccentric position, and a connection rod 12, for example extending radially of the annular body 10, which engages the cavity of the stem 7 for the purpose of permitting mutual fixing of the piston 6 and the associated annular body 10.

Alternatively, each connection rod 12 can extend from the associated body 10 along a direction parallel to that illustrated in the drawings, or rather a direction parallel to the radial direction and not passing through the centre of the body 10. In this case a body 10 can be connected to several rods 12 for respective pistons 6 in positions opposite one another, thereby permitting simplification of the general structure of the associated machine. For example, a single body 10 can be utilised to provide a crank mechanism for a twin cylinder engine or for a four cylinder engine of boxer type.

In particular the rod 12 can be externally threaded so as to engage a corresponding internal threading of the rod 7.

Between each annular body 10 and the associated crank pin there is interposed an eccentric reference element 14 which makes it possible to define a predetermined eccentric position between the annular member and the corresponding portion of the shaft 4.

Because of the presence of the element 14 the radius of the crank of the shaft 4 is reduced to half that of conventional motors for the same piston stroke. This makes it possible to make the shaft 4 lighter and of relatively more compact form.

The element 14 advantageously comprises two separable parts, to facilitate the assembly operations. A first part 14a of the element 14 is substantially C-shape and is internally hollow in such a way as to be lightened, but conveniently reinforced by means of one or more spokes 15. The part 14a defines a pair of external and internal sliding surfaces the internal surface being preferably semicircular and intended to surround part of the corresponding crank pin.

The second part 14b has a complementary shape to that of the element 14a with respect to the circular cavity defined within the annular member 10. It is preferably solid and also defines a pair of external and internal sliding surfaces, the internal surface being substantially semicircular to surround a part corresponding to the external surface of the crank pin.

The parts 14a and 14b of the element 14 are then rigidly fixed together, for example by means of clamping screws the heads of which are conveniently housed in an open region of the internal cavity of the part 14a.

Between the reference element 14, and the body 10 and the shaft 4, respectively, are interposed annular sliding elements 16 and 18, each constituted by a bush or by a rolling element bearing.

The fact that the part 14a is made hollow, whilst the part 14b is solid, makes it possible to displace the centre of gravity of each reference element 14 towards the associated element 14b. In particular the condition is preferred in which the centre of gravity of each reference element 14 assumes a position radially outwardly of the centre of gravity of the corresponding portion of the crankshaft 4 with respect to the centre of the associated annular body 10, in such a way as to give rise on the reference member 14 to a couple of opposite sense with respect to that of the rotation of the crankshaft 4. This counterrotating couple guarantees a correct operation of the engine during starting regardless of the position of the pistons.

If, for constructional reasons, the parts 14a and 14b can not be made hollow and solid respectively, or if this characteristic should not be sufficient to bring the centre of gravity of the element 14 into the above defined desired position, the part 14b can have a counterweight 20 associated with it so as to bring the centre of gravity of the element 14 into a position radially outwardly of the centre of gravity of the crank pin with respect to the centre of the annular body 10.

Auxiliary means may be provided to resist lateral forces of small magnitude which could have to act during the operation of the engine on the annular body 10 of each drive member 8. Such auxiliary means, constituted for each body 10 for example by a pair of opposite and substantially coplanar guide fins 22, can be connected to the crank case 2 and conveniently formed integrally with it. The fins 22 extend transversely of the axis of rotation of the crankshaft and have respective opposite guide surfaces 24 for the outer surface of the associated annular body 10 to slide on.

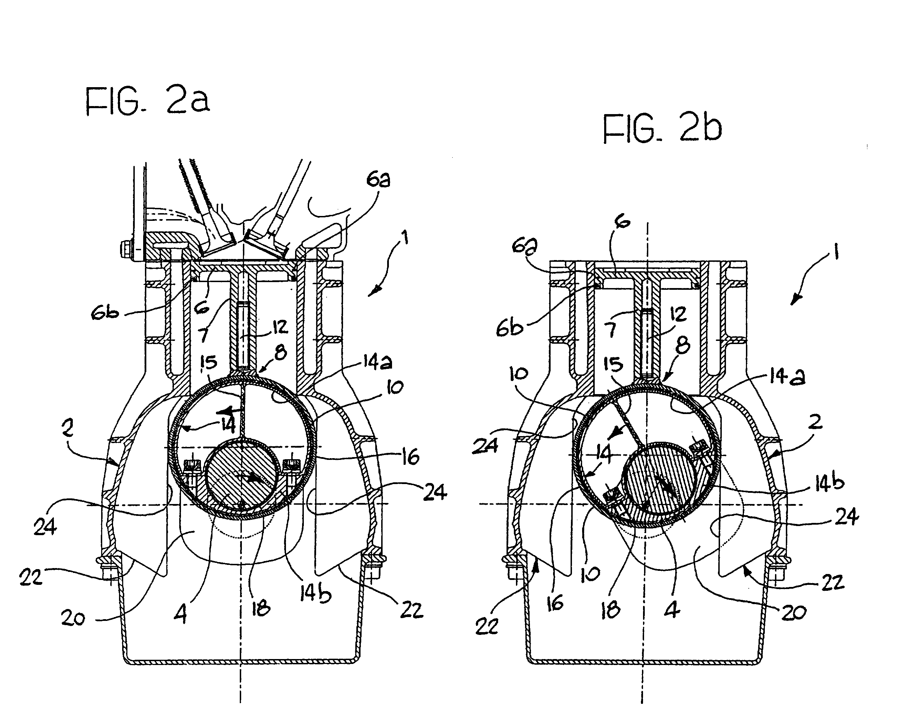

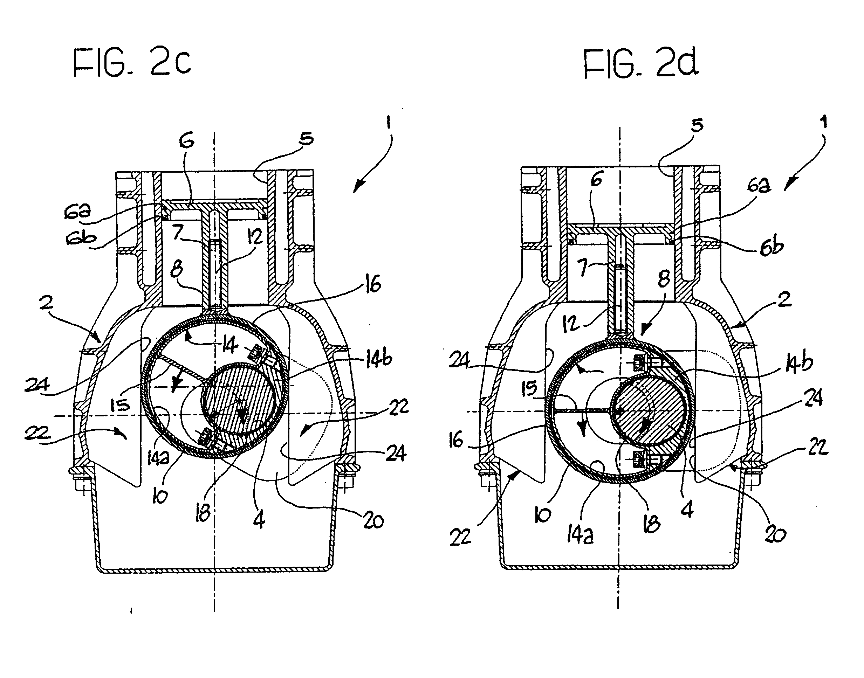

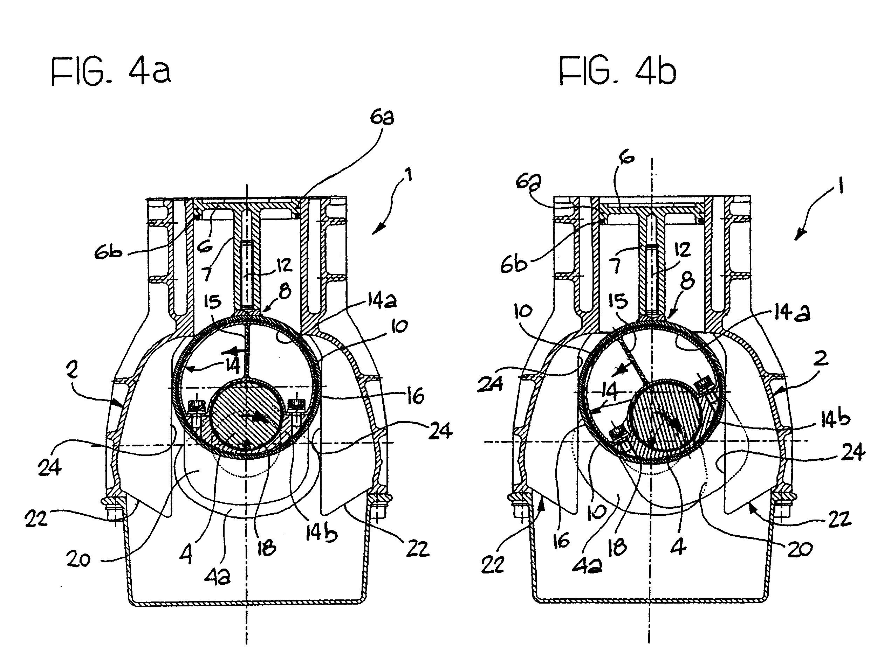

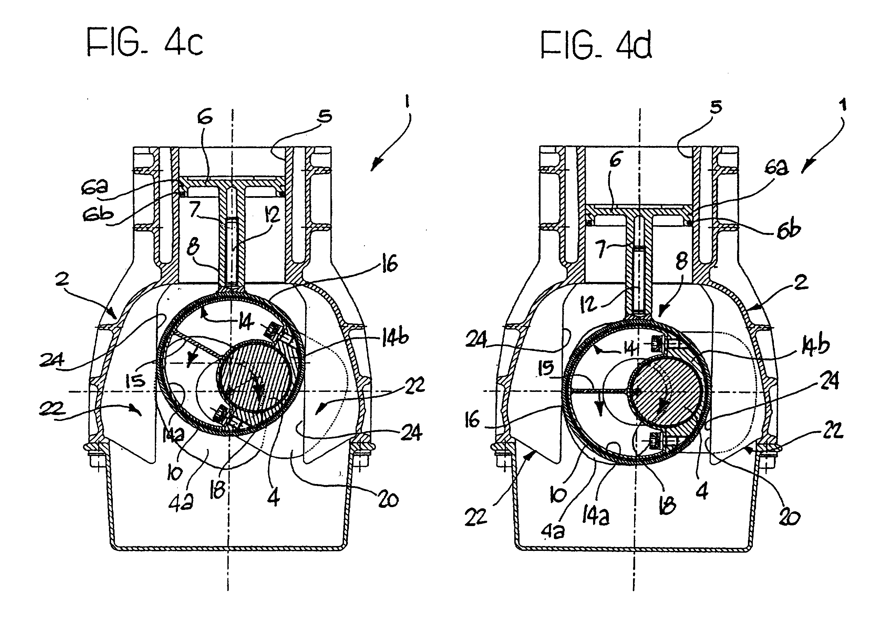

In operation, upon rotation of the crankshaft 4 indicated in Figures 2a-2d and 4a-4d by an arrow directed in the clockwise sense, the reference element 14 is drawn to rotate in the anticlockwise direction indicated by a corresponding arrow in these figures.

As a consequence of the rotation of the crankshaft 4 and the counter rotation of the reference element 14 each annular body 10 is subjected to a reciprocating motion which is transmitted to the associated piston 6 which therefore remains constantly parallel to itself in its movement so that no forces transverse its displacement direction arise.

Since the law of displacement of the piston 6 is purely sinusoidal the maximum velocity of the piston is reached when the crank angle of the crankshaft 4 is equal to 90° with respect to the top-dead-centre and bottom dead-centre positions, whilst in the majority of reciprocating engines normally used the maximum velocity is reached at a crank angle of about 74° with respect to the top-dead-centre position. Thanks to this fact, in an engine according to the invention the part of the stroke of the piston in which the filling of the cylinder takes place is more extended in comparison with conventional engines so that a smaller advance and a smaller variation in the position of the valves is required, in each case giving rise to a better general efficiency of the engine.

For a single cylinder engine or twin cylinder engine according to the invention rotating and counter rotating inertial forces of the first order are generated, inertial forces and couples of the second and upper orders being nil. In this case, rotating inertial forces of the first order can be balanced by providing the portion of the shaft 4 corresponding to each piston with at least one counterweight 4a, possibly two counterweights disposed symmetrically for each crank pin, whilst the counter rotating inertial forces of the first order can be balanced by dimensioning the counterweights 20 connected to the elements 14 in a corresponding manner which, due to the fact that they rotate in an opposite sense from that of the crankshaft 4, lends itself effectively to this purpose.

In the general case of engines having three or five inline cylinders, rotating and counter rotating inertial forces of the first order are absent but rotating and counter rotating couples of the first order and higher orders are present. However, in an engine according to the invention in which the inertial forces and couples of orders greater than the first are absent it is necessary to balance only the inertial couples of the first order. In this case auxiliary counterweights 4a are again utilised, connected to the crankshaft 4 to balance the rotating couples, and counterweights 20 connected to the elements 14 to balance the counter rotating couples, without the need for recourse to additional balancing shafts.

## Claims

1. A crank mechanism for a reciprocating machine, particularly an internal combustion engine, comprising a rotatably mounted crankshaft (4) and at least one piston (6) which can be subject to a reciprocating motion along a respective rectilinear guide (5) consequent on the rotation of the crankshaft (4), in which each piston (6) is associated with a drive member (8) having one end (10) which surrounds a crank pin of the crankshaft (4),
characterised in that each drive member (8) is rigidly connected to at least one associated piston (6).

2. A crank mechanism according to Claim 1, characterised in that the said drive member (8) comprises an annular body (10) surrounding a corresponding crank pin and mounted in an eccentric position with respect to the associated portion of the crankshaft (4), fixing means (12) of at least one piston (6) being fixed to the annular body (10).

3. A crank mechanism according to Claim 2, characterised in that the said fixing means comprise at least one connection rod (12) which extends from the annular body (10).

4. A crank mechanism according to Claim 3, characterised in that the said connection rod (12) extends from the annular body (10) in a radial direction.

5. A crank mechanism according to Claim 3, characterised in that the said connection rod (12) extends from the annular body (10) in a direction parallel to the radial direction and not passing through the centre of the annular body (10).

6. A crank mechanism according to Claim 4 or Claim 5, characterised in that several connection rods (12) for respective pistons (6) extend from the same annular body (10).

7. A crank mechanism according to any of Claims 2 to 6, characterised in that it includes an eccentric reference element (14) for relative positioning between each annular body (10) and the corresponding portion of the crankshaft (4), this reference element (14) being disposed at least in part within the associated annular body (10) and being mounted rotatably with respect to the crankshaft (4) and the associated annular body (10).

8. A crank mechanism according to Claim 7, characterised in that the said reference element (14) is subject to a contrary rotary motion with respect to that of the crankshaft (4) as a consequence of the rotation of the crankshaft (4).

9. A crank mechanism according to Claim 8, characterised in that means (16, 18) for assisting relative sliding are interposed between each annular body (10) and the associated reference element (14), and between this and the crankshaft (4).

10. A crank mechanism according to any of Claims 7 to 9, characterised in that the centre of gravity of each reference element (14) is located in a position radially outwardly of the centre of gravity of the corresponding portion of the crankshaft (4) with respect to the centre of the respective annular body (10).

11. A crank mechanism according to any of Claims 1 to 10, characterised in that each piston (6) has no skirt.

12. A crank mechanism according to any of Claim 1 to 11, characterised in that the crank radius of each crank pin is equal to about half of the crank radius of a conventional crank mechanism for the same stroke of the piston.

13. A crank mechanism according to any of Claims 2 to 12, characterised in that it includes means (22) for resisting the lateral displacement of each annular body (10).

14. A crank mechanism according to Claim 13, characterised in that the said displacement resisting means comprise a pair of substantially coplanar opposite guide elements (22) which extend transversely of the axis of rotation of the crankshaft (4) from a casing (2) of the crank mechanism (1), supporting the crankshaft itself.

15. A crank mechanism according to any of Claims 1 to 14, characterised in that it forms part of a single cylinder, twin cylinder, three cylinder or five cylinder reciprocating machine and includes auxiliary counterweight means (4a) for balancing a rotary couple or force of the first order, such auxiliary means (4a) being connected to the crankshaft (4) close to each annular body (10).

16. A reciprocating machine, particularly an internal combustion engine, including a crank mechanism according to any of Claims 1 to 15.
